# EUROPÄISCHE PATENTSCHRIFT

(11) **EP 0 834 160 B1**
(45) Veröffentlichungstag und Bekanntmachung des Hinweises auf die Patenterteilung: **13.09.2000**
(21) Anmeldenummer: 96922807.1
(22) Anmeldetag: 14.06.1996
(51) Int. Cl.: G07F 7/10

(54) **Vorrichtung zum Lesen und/oder Löschen von Chipkartendaten**
Device for reading and/or erasing IC card data
Dispositif pour lire et/ou effacer des données sur une carte à puce

(30) Priorität: 17.06.1995 DE 19522029
(43) Veröffentlichungstag der Anmeldung: 08.04.1998
(73) Patentinhaber: ÜSTRA Hannoversche Verkehrsbetriebe AG, D-30159 Hannover (DE)
(72) Erfinder: EBBING, Georg, D-30853 Langenhagen (DE)
(74) Vertreter: König, Norbert
(86) Internationale Anmeldenummer: EP9602570
(87) Internationale Veröffentlichungsnummer: WO9700500

(56) Entgegenhaltungen:
- EP-A- 0 358 290
- DE-A- 4 018 772

## Beschreibung

Die Erfindung betrifft eine Vorrichtung zum Lesen und/oder Löschen von Chipkarten, auf denen wenigstens eine wenigstens einem Emittenten zugeordnete Datei gespeichert ist, die aus wenigstens einem Datensatz besteht und einen Kopf aufweist, in dem Informationen und Schlüssel für ein Zugriffsverfahren gespeichert sind, wobei Dateien unterschiedlicher Emittenten getrennt sind.

Chipkarten mit einem Speicherelement, das beispielsweise durch einen Mikrochip oder einen Magnetstreifen gebildet ist, sind allgemein bekannt. Sie werden für vielfältige Zwecke verwendet, beispielsweise als Telefonkarten, Krankenversicherungskarten, Scheckkarten, Kreditkarten, Benutzerausweise oder dergleichen. Die Chipkarten werden von dem jeweiligen Emittenten der auf der Chipkarte gespeicherten Daten, also der Telekom, einer Krankenversicherung, einem Kreditinstitut oder dergleichen, an den Benutzer ausgegeben.

Zum Lesen von auf der Chipkarte gespeicherten Daten oder zum Schreiben von Daten auf die Chipkarte ist eine Vorrichtung zum Lesen und/oder Schreiben erforderlich, die im allgemeinen ortsfest installiert ist, beispielsweise in einem Kartentelefon oder in einem Geldautomaten.

Ein Benutzer der Chipkarte kann somit nur an den ortsfest installierten Vorrichtungen zum Lesen und/oder Schreiben auf die auf der Chipkarte gespeicherten Daten zugreifen. Außerdem sind die ortsfest installierten Vorrichtungen zum Lesen und/oder Schreiben teuer und aufwendig. Dies schränkt die Verwendungsmöglichkeiten von Chipkarten erheblich ein.

Durch die DE 40 18 772 ist eine einen Prozessor aufweisende Chipkarte bekannt, die neben einer integrierten Stromversorgung mindestens einen Mikroprozessor-Chip mit mindestens einer Speichereinheit in Form eines Schreib/Lesespeichers aufweist. Ferner ist eine Eingabevorrichtung bekannt, in die die Chipkarte einführbar ist und die ein Tastenfeld mit Eingabetasten aufweist. Die Eingabevorrichtung weist selbst einen Mikroprozessor-Chip mit einem Schreib/Lesespeicher auf und dient zur Programmierung der Chipkarte und weist ein Display auf, das zur Eingabekontrolle von über die Tasten des Tastenfeldes eingegebenen Codezahlen dient.

Durch die EP 0 385 290 ist eine elektronische Multifunktionskarte bekannt, die mit einem eigenen Rechner, einer eigenen Stromversorgung, zwei Displays und mehreren Eingabe- und Betätigungstasten ausgestattet ist. Mit Hilfe eines Mastergerätes können Daten aus Chipkarten in die Multifunktionskarte eingelesen und dort abgespeichert werden. Mit Hilfe eines Prüfterminals können Daten aus einer solchen Chipkarte ausgelesen und angezeigt werden. Das Prüfterminal besitzt jedoch keine eigene Anzeigeeinrichtung, sondern nutzt das Anzeigefeld der Chipkarte mit.

Der Erfindung liegt die Aufgabe zugrunde, eine Vorrichtung zum Lesen und/oder Löschen von Chipkarten anzugeben, auf denen wenigstens eine wenigstens einem Emittenten zugeordnete Datei gespeichert ist, die aus wenigstens einem Datensatz besteht und einen Kopf aufweist, in dem sämtliche Informationen und Schlüssel für ein sicheres Zugriffsverfahren gespeichert sind, wobei Dateien unterschiedlicher Emittenten voneinander getrennt sind, die ein Lesen von auf der Chipkarte gespeicherten Daten oder Löschen von Dateien der Chipkarte unabhängig von ortsfest installierten Vorrichtungen ermöglicht und einfach und kostengünstig herstellbar ist.

Diese Aufgabe wird durch die im Anspruch 1 angegebene Lehre gelöst.

Die erfindungsgemäße Vorrichtung weist ein im wesentlichen flaches, handgehaltenes Gehäuse auf, in dem die zum Lesen und Anzeigen und/oder Löschen von der Vorrichtung zugeordneten Chipkarten erforderlichen Einrichtungen, insbesondere eine Stromversorgungseinrichtung und eine Lese/Löscheinrichtung und Anzeigeneinrichtung aufgenommen sind. Auf diese Weise ist eine tragbare, handgehaltene Vorrichtung geschaffen, die ein Lesen und Anzeigen und/oder Löschen von Chipkarten unabhängig von ortsfest installierten Vorrichtungen ermöglicht.

Mit Hilfe der erfindungsgemäßen Vorrichtung kann der Benutzer die auf der Chipkarte gespeicherten Datensätze seitenweise auslesen und sich über die Anzeigeneinrichtung in schneller und einfacher Weise einen Überblick über sämtliche auf der Chipkarte gespeicherten Daten verschaffen.

Besonders vorteilhaft sind solche Chipkarten, auf denen Dateien unterschiedlicher Emittenten speicherbar sind und die unterschiedlichen Emittenten zugeordneten Datensätze getrennt voneinander gespeichert sind, deren Inhalt der Emittent selbst festlegen kann. Ein zu speichernder Datensatz wird in dem Speicherelement in Speicherplätzen abgelegt, die zusammen dargestellt einen vom äußeren Rahmen her fest definierten Informationsinhalt ergeben und auf diese Weise als eine Seite darstellbar sind. Ein Datensatz kann beispielsweise eine Berechtigung (beispielsweise einen Fahrschein, eine Eintrittskarte, eine Platzreservierung, einen Gutschein), einen Nachweis (beispielsweise einen Kassenbon, einen Mitgliederausweis, einen Dienstausweis, eine Quittung), eine Information (beispielsweise eine Fahrplanauskunft, eine Adresse, den Standort eines im Parkhaus geparkten Autos, eine Zimmernummer im Hotel) oder Werbung enthalten.

Dient die Chipkarte beispielsweise zur Speicherung von Fahrscheinen eines Nahverkehrsunternehmens und repräsentieren die Datensätze somit Fahrscheine, so kann der Benutzer vor Fahrtantritt die auf der Chipkarte gespeicherten Datensätze auslesen, um sicherzustellen, daß auf der Chipkarte ein einen gültigen Fahrschein repräsentierender Datensatz gespeichert ist. Bei Fahrtantritt kann dann der betreffende Datensatz auf der Chipkarte gelöscht oder elektronisch entwertet werden, beispielsweise in einer in einer Stadtbahn angeordneten Vorrichtung zum Lesen und/oder Schreiben, oder in einer erfindungsgemäßen Vorrichtung, die beispielsweise ein Schaffner bei sich trägt.

Eine andere Verwendungsmöglichkeit der erfindungsgemäßen Vorrichtung besteht darin, daß die auf der Chipkarte gespeicherten Datensätze Quittungen, beispielsweise von Einzelhandelsunternehmen, repräsentieren. Beim Einkaufen kann der Benutzer die erfindungsgemäße Vorrichtung bei sich tragen und sich durch Lesen der auf der Chipkarte gespeicherten Datensätze in schneller und einfacher Weise einen Überblick über seine bisherigen Ausgaben verschaffen. Falls der Benutzer die Quittungen nicht mehr benötigt, kann er die betreffenden Datensätze mit der erfindungsgemäßen Vorrichtung löschen.

Form, Größe und äußere Gestaltung der erfindungsgemäßen Vorrichtung sind in weiten Grenzen wählbar.

Vorteilhafte und zweckmäßige Weiterbildungen der erfindungsgemäßen Lehre sind in den Unteransprüchen angegeben.

Die Erfindung soll nachfolgend anhand von in der beigefügten Zeichnung dargestellten Ausführungsbeispiele näher erläutert werden.

Es zeigt:
- Fig. 1: in Draufsicht eine Chipkarte,
- Fig. 2: ein erstes Ausführungsbeispiel der erfindungsgemäßen Vorrichtung in Draufsicht mit teilweise eingeführter Chipkarte,
- Fig. 3: eine Ansicht auf eine Schmalseite der Vorrichtung gemäß Fig. 2,
- Fig. 4: in perspektivischer Darstellung ein zweites Ausführungsbeispiel der erfindungsgemäßen Vorrichtung,
- Fig. 5: eine Draufsicht auf eine dritte Ausführungsform der erfindungsgemäßen Vorrichtung,
- Fig. 6: schematisch die Belegung des Speichers in einer Chipkarte und
- Fig. 7a-7d: verschiedene Anzeigen einer Anzeigenvorrichtung der Vorrichtung.

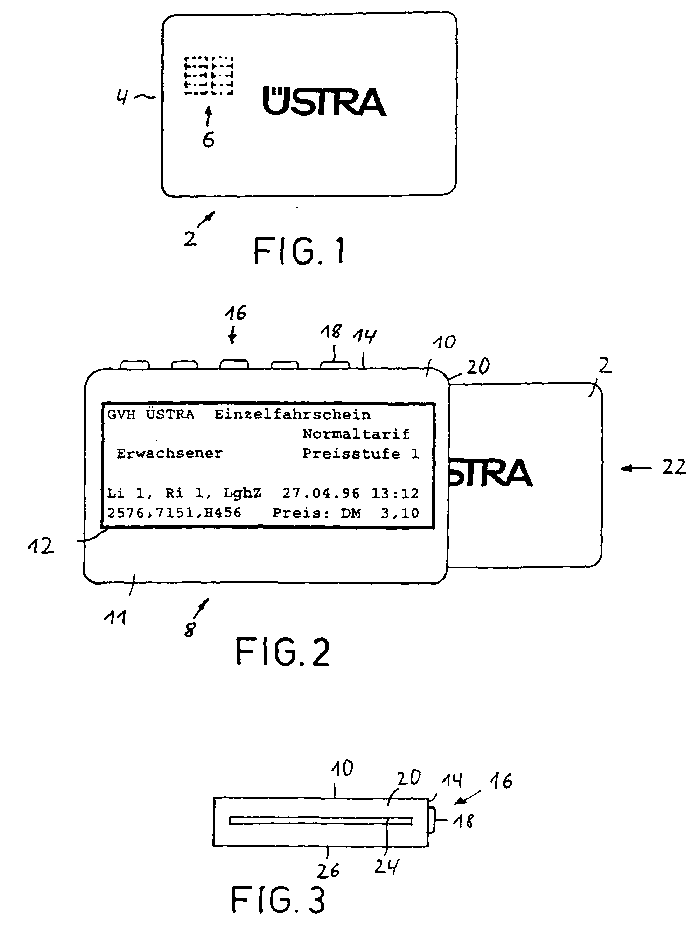

In Fig. 1 ist eine Chipkarte 2 dargestellt, die aus einem flachen Kartenkörper 4 aus Kunststoff besteht, in den ein in der Zeichnung nicht sichtbares Chipelement eingebettet ist. Auf einer der Flachseiten der Chipkarte 2 ist ein Kontaktfeld 6 gebildet, das aus mehreren Kontakten besteht, die mit den Anschlüssen des Chipelements verbunden sind. Über das Kontaktfeld 6 ist mittels einer weiter unten näher beschriebenen Vorrichtung zum Lesen und/oder Löschen ein Zugriff auf den Speicherbereich des Chipelements möglich, beispielsweise ein Lesen oder Löschen von auf der Chipkarte 2 gespeicherten Datensätzen.

In Fig. 2 ist eine Vorrichtung 8 zum Lesen und/ oder Löschen von Chipkarten dargestellt, die ein flaches, handgehaltenes Gehäuse 10 aufweist. Auf einer Flachseite 11 des Gehäuses 10 ist ein LCD-Anzeigefeld 12 (nachfolgend Display 12 genannt) zur seitenweisen Anzeige von auf der Chipkarte 2 gespeicherten Datensätzen angeordnet. Die Größe des Displays 12 ist bei diesem Ausführungsbeispiel so gewählt, daß gleichzeitig jeweils ein auf der Chipkarte 2 gespeicherter Datensatz anzeigbar ist. An einer Schmalseite 14 weist das Gehäuse ein Tastenfeld 16 auf, das durch mehrere Drucktasten gebildet ist, von denen nur eine Drucktaste mit dem Bezugszeichen 18 gekennzeichnet ist. Mittels der Tasten 18 des Tastenfeldes kann der Benutzer die Vorrichtung bedienen, beispielsweise die Vorrichtung ein- und ausschalten und auf der Chipkarte 2 gespeicherte Datensätze auslesen und auf dem Display wiedergeben oder löschen.

In einer Schmalseite 20 des Gehäuses 10 ist ein in der Draufsicht nicht erkennbarer Schlitz gebildet, durch den die Chipkarte 2 in das Innere des Gehäuses 10 in den Bereich einer in dem Gehäuse 20 angeordneten, in der Zeichnung nicht dargestellten Lese/Löscheinrichtung eingeführt ist.

Aus den Figuren 1 und 2 ist ersichtlich, daß die Größe des Gehäuses 10 in der Draufsicht im wesentlichen der Größe der Chipkarte 2 in der Draufsicht entspricht.

Bei Betrieb ist die Chipkarte 2 so in das Gehäuse 10 eingeführt, daß das Kontaktfeld 6 elektrisch leitend mit der Lese/Löscheinrichtung in Verbindung steht. Die Chipkarte 2 kann in Lese/Löschstellung im wesentlichen vollständig, oder, wie dies in Fig. 2 dargestellt ist, teilweise in dem Gehäuse 10 aufgenommen sein. Die Lese/Löscheinrichtung liest auf der Chipkarte 2 gespeicherte Datensätze aus und steuert unmittelbar oder über eine Steuereinrichtung, beispielsweise einen Mikroprozessor, das Display 12 an, auf dem dann jeweils ein auf der Chipkarte 2 gespeicherter Datensatz als Seite dargestellt wird. In Fig. 2 ist dies beispielhaft für einen auf der Chipkarte 2 gespeicherten Datensatz dargestellt, der einen Fahrschein eines Nahverkehrsunternehmens repräsentiert.

Fig. 3 zeigt eine Ansicht in Richtung eines Pfeiles 22 auf die Vorrichtung gemäß Fig. 2. Es ist ersichtlich, daß das Gehäuse 10 flach ausgebildet ist. Ferner ist ersichtlich, daß in der Schmalseite 20 ein Schlitz 24 zum Einführen der Chipkarte in das Innere des Gehäuses 10 gebildet ist, wobei die lichte Weite des Schlitzes 24 im wesentlichen dem Querschnitt der Chipkarte 2 entspricht. Im Inneren des Gehäuses 10 kann ein nicht dargestellter Schalter angeordnet sein, der beim Einführen der Chipkarte 2 in das Gehäuse 10 beispielsweise die Stromversorgung wenigstens von Teilen der Vorrichtung 8 einschaltet oder die Lese/Löscheinrichtung betätigt.

Bei Benutzung der Vorrichtung 8 kann der Benutzer die untere Flachseite 26 des Gehäuses 10 mit seiner Handfläche abstützen und mit den Fingern der gleichen Hand das Tastenfeld 16 bedienen. Es ist somit eine einhändige Bedienung der Vorrichtung 8 möglich.

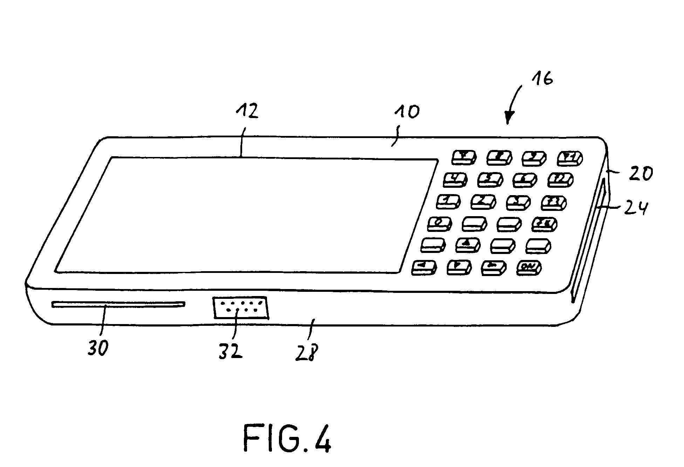

In Fig. 4 ist ein weiteres Ausführungsbeispiel der erfindungsgemäßen Vorrichtung dargestellt. Gleiche Teile sind mit gleichen Bezugszeichen wie bei Fig. 2 und 3 versehen. Bei diesem Ausführungsbeispiel weist das flache Gehäuse 10 ein Display 12 auf, dessen Größe derart gewählt ist, daß gleichzeitig mehrere auf der Chipkarte 2 gespeicherte Datensätze anzeigbar sind. Ferner ist auf der Flachseite das Tastenfeld 16 angeordnet, das einen Ziffernblock, beispielsweise zum Eingeben eines Codes zur Identifizierung des Benutzers, aufweist. In der Schmalseite 20 ist der Schlitz 24 zum Einführen der in dieser Figur nicht dargestellten Chipkarte in das Innere des Gehäuses 10 gebildet. Ferner weist das Gehäuse 10 in einer Schmalseite 28 eine Ausnehmung 30 auf, durch die ein in der Figur nicht dargestellter Papierstreifen in das Innere des Gehäuses 10 in den Bereich einer nicht dargestellten Druckeinrichtung einführbar ist. Die Druckeinrichtung dient zum Ausdrucken von auf der Chipkarte 2 gespeicherten Datensätzen auf den Papierstreifen.

Des weiteren weist das Gehäuse 10 an der Schmalseite 28 eine Schnittstelle 32 auf, an die beispielsweise ein nicht dargestelltes Datenkabel anschließbar ist, über das die Lese/Löscheinrichtung der Vorrichtung mit einem PC oder einem externen Speichermedium verbindbar ist.

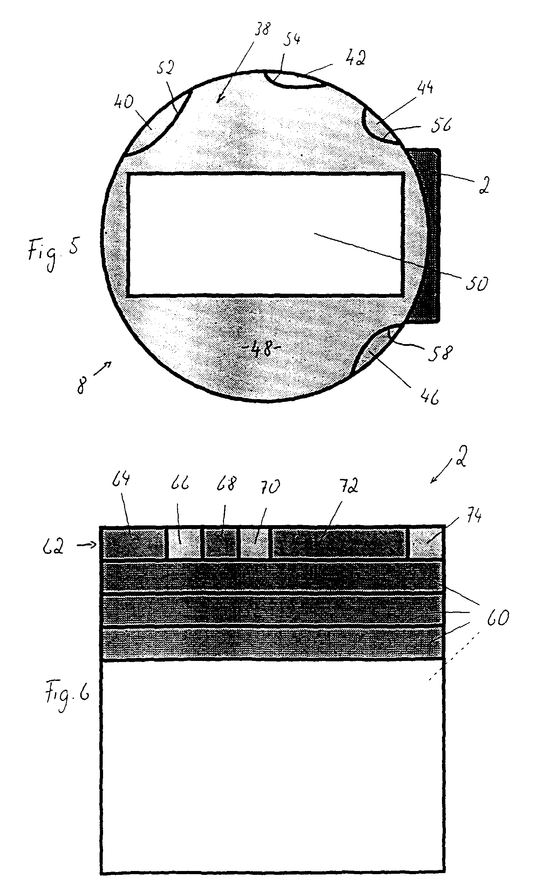

Nachfolgend soll Bezug genommen werden auf die Fig. 5 bis 7.

Die Fig. 5 zeigt eine Vorrichtung 8 zum Lesen und/oder Löschen von Chipkarten 2, die ein Gehäuse 38 in Form einer kreisförmigen, etwa hand- oder handtellergroßen Schachtel aufweist. Auf dem Kreisumfang des Gehäuses 38 sind Tasten 40, 42, 44, 46 zur Bedienung der Vorrichtung 8 angeordnet. Auf der einen Flachseite 48 befindet sich etwa mittig eine Anzeigeeinrichtung in Form eines LCD-Displays 50. In der zylindrischen Umfangsfläche des Gehäuses 38 ist ein Schlitz (nicht dargestellt) zum Einführen der Chipkarte 2 ausgebildet.

Die Tasten 40, 42, 44 und 46 sind über einen Teil des Umfanges des Gehäuses 38 ergonomisch zur Einhandbedienung verteilt angeordnet, derart, daß beim Halten des Gehäuses 38 in der Hand die Finger im wesentlichen auf den Tasten liegen. Die Tasten schließen vorzugsweise in ihrer Ausgangslage bündig mit der Umfangsfläche ab und sind vorzugsweise in bogenförmigen randseitigen Ausnehmungen 52, 54, 56 und 58 angeordnet.

Die Fig. 6 zeigt schematisch den Speicher einer Chipkarte 2, in der verschiedene Dateien, bestehend aus einem oder mehreren Datensätzen 60, abgelegt sind. Die Dateien haben einen Kopf 62, der als eigene, eindeutig zugeordnete Datei realisiert sein kann, oder aber durch einen oder mehrere Datensätze in der Datei selbst realisiert sind. In dem Kopfteil 62 befinden sich alle Informationen und Schlüssel 64, die ein sicheres Zugriffsverfahren gewährleisten. Nur der Emittent der Daten (z. B. ein Dienstleister) kann die Daten erzeugen, lesen, verändern und löschen. Ein anderer Dienstleister oder Emittent kann die Daten nur lesen, wenn ihm der Emittent der Daten dazu die Berechtigung in Form eines Leseschlüssels gegeben hat. Der Besitzer der Chipkarte 2 kann alle Daten lesen und löschen, ohne dazu von den jeweiligen Emittenten berechtigt worden zu sein; allerdings kann er die Daten nicht erzeugen oder verändern. Im Kopfteil 62 befinden sich ferner Daten 66 zur Identifizierung des jeweiligen Emittenten, Daten 68, die die Nummer des Gerätes betreffen, mit dem die Datei erzeugt wurde, sowie Informationen 70 über die Art der Daten. Außerdem ist im Kopfteil 62 ein Bereich 72 vorgesehen, der im Klartext eine Kurzbeschreibung der Daten enthält. Schließlich weist die als ein Beispiel in der Fig. 6 schematisch dargestellte Chipkarte noch einen Bereich 74 auf, der Informationen darüber enthält, welcher Emittentengruppe die Datei zugeordnet werden muß.

Die Datensätze verschiedener Dateien können auch alle in einer Datei als verkettete Listen gespeichert sein, da über den Kopfteil die zusammengehörenden Datensätze eindeutig angesprochen werden können. Die Datensätze 60 enthalten die eigentlichen Dateninhalte, z. B. einen elektronischen Fahrschein.

Der Besitzer der Vorrichtung 8 trägt diese Vorrichtung üblicherweise bei sich. Die Vorrichtung ist, wie oben beschrieben, hinsichtlich der Größe so gewählt, daß der Besitzer die Vorrichtung bequem in einer Hand, z. B. der linken Hand halten kann und seine Finger genau auf den Tasten liegen.

Möchte sich der Besitzer und Benutzer der Vorrichtung 8 einen Überblick über die Berechtigungen und Informationen seiner Chipkarte verschaffen, steckt er die Chipkarte 2 in die Vorrichtung 8, wodurch zunächst Erkennungs- und Autorisierungsprozeduren zwischen Chipkarte und Gerät ablaufen. Da dies Stand der Technik ist, soll hierauf nicht weiter eingegangen werden. Solange die Chipkarte in die Vorrichtung gedrückt wird, ist die Vorrichtung eingeschaltet.

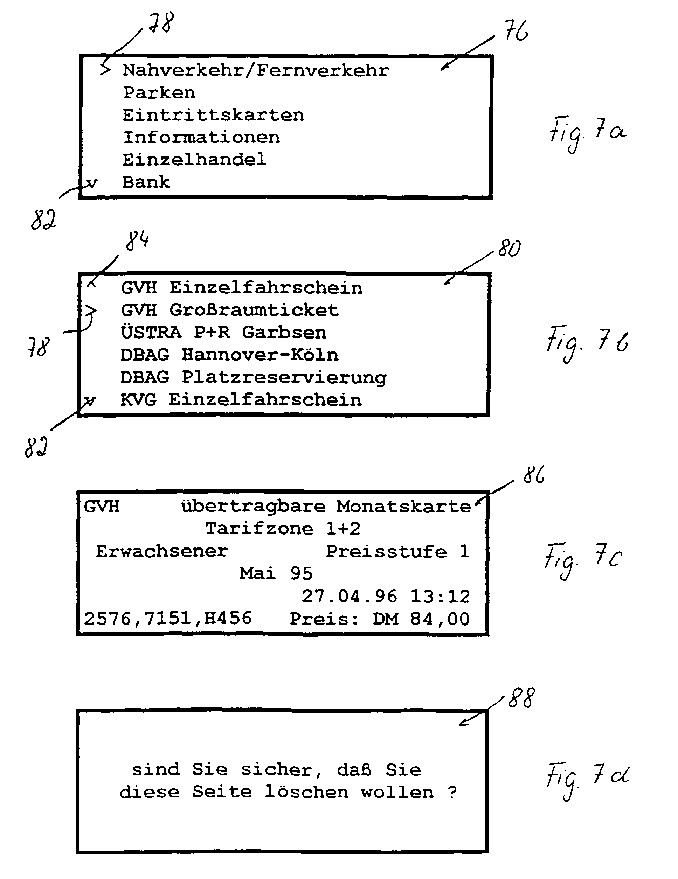

Die Vorrichtung 8 stellt zunächst auf dem Display 50 eine erste Übersicht 76 dar, vgl. Fig. 7a. Auf dieser ersten Übersicht 76 werden die im Kopfbereich 74 der Chipkarte 2 gespeicherten Informationen bezüglich der Emittentengruppen wiedergegeben. Der Inhalt für diese erste Übersicht 76 kann alternativ auch im Programm der Vorrichtung 8 stehen, wenn dieser Inhalt fest vorgegeben ist, z. B. nach Absprache mit den Emittenten. Im in der Fig. 7a dargestellten Beispiel besteht die Übersicht 76 aus sechs Zeilen. Jede Zeile dieser Übersicht entspricht einer Emittentengruppe 74.

In der obersten Zeile erscheint in der ersten Spalte eine Markierung 78. Mit der Taste 40 kann diese Markierung 78 zu den nächst unteren Zeilen bewegt werden. Nachdem die Markierung durch mehrfaches Drücken der Taste 40 an der gewünschten Stelle plaziert ist, wird die Taste 42 betätigt. Nach Auswahl der gewünschten Emittentengruppe sucht das Programm mit Hilfe der Information 74 des Kopfteiles 62 der Chipkarte 2 sämtliche Dateien dieser Emittentengruppe und gibt auf dem Display 50 eine zweite Übersicht 80, vgl. Fig. 7b, wieder, auf der die im Bereich 72 des Kopfteiles 2 abgelegte Kurzbeschreibung der Dateien dargestellt wird. Mit Hilfe der Tasten 40 und 42 kann der oben für die Übersicht 76 schon beschriebene Auswahlvorgang durchgeführt werden.

Es können auch eine oder mehrere Folgeseiten für die Übersicht 76 und 80 existieren, was durch einen Pfeil 82 angezeigt wird. Mit der Taste 46 kann der Benutzer der Vorrichtung 8 nun die weiteren Seiten anwählen. Wenn es vorhergehende Seiten gibt, wird dies durch einen Pfeil 84 angezeigt; der Benutzer kann dann mit Hilfe der Taste 44 die vorhergehenden Seiten anwählen. Die Markierung 78 wird selbstverständlich beim Seitenwechsel in die obere oder untere Zeile der jeweiligen Übersicht übernommen.

Nach Beendigung des Auswahlvorganges und Anwahl einer Zeile der Übersicht 80 mittels der Taste 42, öffnet das Programm die zu der Seite gehörenden Datensätze 60, dekomprimiert die Datensätze, falls diese komprimiert wurden, und stellt sie auf dem Display 50 in Form einer Seite 86, vgl. Fig. 7c, dar. Auf der Seite 86 erscheinen die Informationen, die der Leistungserbringer (Emittent), in diesem Fall z. B. ein Nahverkehrsunternehmen, in den Chip geschrieben hat, im Klartext.

Die Daten in den Datensätzen sind in Form von Seiten organisiert, so daß sich immer dieselbe Darstellung auf dem Display ergibt. Dies ist auch der Fall, wenn die Chipkarte in einem öffentlichen Servicegerät oder per Chipkartenleser an einem PC ausgelesen wird. Alle Informationen, die Daten selbst, aber auch die Bedeutungen, sind in den zur Seite gehörenden Datensätzen, wenn möglich komprimiert oder kodiert, abgespeichert. Dieses Verfahren hat den Vorteil, daß der Emittent der Information sich nicht über Inhalte, z. B. die Bedeutung bestimmter Daten, mit anderen Emittenten abstimmen muß. Wenn der Emittent seine Daten kennt, kann er sie für Kontrollzwecke auch wieder interpretieren. Jeder Emittent gestaltet seinen Berechtigungsschein nach Inhalt und Form selbst. Eine Seite entspricht dann z. B. einem Fahrschein. Damit ist eine sehr leichte Verständlichkeit für die Benutzer möglich, da das Prinzip der Darstellung der Information gegenüber einem gedruckten Berechtigungsschein nicht geändert wurde.

Wie bei den Übersichten 76, 80 können auch bei den eigentlichen Darstellungsseiten 86 Folgeseiten existieren, die mit demselben Verfahren Pfeile 78, 82, 84 und Tasten 44 und 46 angewählt werden können.

Das Programm der Vorrichtung 8 ist so ausgelegt, daß nach Drücken der Taste 46 stets wieder die zweite Übersicht 80 (vgl. Fig. 7b) gezeigt wird, so daß ein weiterer Wahlvorgang erfolgen kann.

Der Benutzer kann einen Datensatz löschen; hierzu zeigt er den entsprechenden Datensatz an und drückt dann die Tasten 40 und 46 gleichzeitig. Die Vorrichtung 8 zeigt dann auf dem Display eine Abfrage 88 an, wie dies beispielhaft in der Fig. 7d dargestellt ist. Wenn der Benutzer dann nach Wiedergabe der Abfrage 88 die Taste 42 drückt, löscht die Vorrichtung 8 den Datensatz.

Die in der Fig. 5 dargestellte Tastenbelegung der Vorrichtung 8 ist nur als Beispiel zu betrachten. Dieses Beispiel zeigt jedoch, daß eine Bedienung über vier Tasten möglich ist.

Der Kopf 62 der Dateien der Chipkarte 2 kann mehr oder weniger Informationen und Schlüssel, wie beschrieben, aufweisen. Er kann insbesondere auch noch Sprachkennzeichen enthalten.

## Patentansprüche

1. Vorrichtung zum Lesen und Löschen von Daten von der Vorrichtung (8, 16) zugeordneten Chipkarten (2), die wenigstens einen Speicher aufweisen, in dem wenigstens eine wenigstens einem Emittenten zugeordnete Datei gespeichert ist, die aus wenigstens einem Datensatz (60) besteht und einen Kopf (62) aufweist, in dem sämtliche Informationen und Schlüssel (64-74) für ein sicheres Zugriffsverfahren gespeichert sind, wobei Dateien unterschiedlicher Emittenten voneinander getrennt sind,
mit einem im wesentlichen flachen für Handhaltung ausgebildeten Gehäuse (10, 38),
mit einer in dem Gehäuse (10, 38) der Vorrichtung (8, 16) angeordneten Stromversorgungseinrichtung,
mit einer in dem Gehäuse (10, 38) angeordneten, zum Lesen und Löschen von im Speicher der Chipkarte (2) gespeicherten Daten ausgebildeten Lese/Löscheinrichtung,
mit einem in einer der Schmalseiten (20) des Gehäuses (10, 38) gebildeten Schlitz (24) zum Einführen einer Chipkarte (2) in das Gehäuse in den Bereich der Lese/Löscheinrichtung,
mit einer Bedieneinrichtung zur Bedienung der Vorrichtung (8, 16) und
mit einer mit der Lese/Löscheinrichtung verbundenen Anzeigeeinrichtung (12, 50) zur Anzeige wenigstens eines aus dem Speicher der Chipkarte (2) gelesenen Datensatzes, wobei die Datensätze so organisiert sind oder von der Vorrichtung (8, 16) so organisiert werden, daß ein Datensatz als Seite oder mehrere Datensätze als mehrere Seiten auf der Anzeigeeinrichtung (12, 50) darstellbar ist/sind.

2. Vorrichtung nach Anspruch 1, **dadurch gekennzeichnet,** daß im Kopf (62) der Chipkarte (2) oder im Programm der Vorrichtung (8) zum Lesen und/oder Löschen wenigstens ein auf wenigstens einer ersten Übersicht (76) der Anzeige (12, 50) darstellbarer Datensatz vorhanden ist, dessen Daten so organisiert sind, daß diese zeilenweise den Emittenten zugeordnet sind und per Bedieneinrichtung anwählbar sind.

3. Vorrichtung nach Anspruch 1 oder 2, **dadurch gekennzeichnet,** daß im Kopf (62) der Chipkarte (2) eine Kurzbeschreibung (72) der Daten im Klartext enthalten ist, welche auf wenigstens einer zweiten Übersicht (80) der Anzeigeeinrichtung (12, 50) darstellbar ist.

4. Vorrichtung nach Anspruch 1, **dadurch gekennzeichnet,** daß die Datensätze verschiedener Dateien als verkettete Listen in einer Datei gespeichert und über Kopfinformationen ansprechbar sind, und daß zusammenhängende Datensätze der Dateien über zugeordnete, im Kopf (62) gespeicherte Informationen durch die Vorrichtung (8) ansprechbar sind.

5. Vorrichtung nach einem der vorhergehenden Ansprüche, **dadurch gekennzeichnet,** daß die Anzeigeeinrichtung ein Anzeigefeld (12, 50) aufweist.

6. Vorrichtung nach Anspruch 5, **dadurch gekennzeichnet,** daß die Größe des Anzeigefeldes (12, 50) derart gewählt ist, daß gleichzeitig wenigstens eine auf der Chipkarte (2) gespeicherte Seite anzeigbar ist.

7. Vorrichtung nach Anspruch 5 oder 6, **dadurch gekennzeichnet,** daß das Anzeigefeld (12, 50) ein LCD-Anzeigefeld ist.

8. Vorrichtung nach einem der Ansprüche 1 bis 7, **dadurch gekennzeichnet,** daß das Anzeigefeld (12, 50) auf einer der Flachseiten (11, 48) des Gehäuses (10, 38) angeordnet ist.

9. Vorrichtung nach einem der Ansprüche 6 bis 8, **dadurch gekennzeichnet,** daß die Größe des Anzeigefeldes (12) im wesentlichen der Größe der Flachseite (11) des Gehäuses (10) entspricht.

10. Vorrichtung nach einem der vorhergehenden Ansprüche, **dadurch gekennzeichnet,** daß die Chipkarte (2) im wesentlichen vollständig in dem Gehäuse (10, 38) aufnehmbar ist.

11. Vorrichtung nach einem der vorhergehenden Ansprüche, **dadurch gekennzeichnet,** daß die Bedieneinrichtung ein Tastenfeld (16) aufweist.

12. Vorrichtung nach Anspruch 11, **dadurch gekennzeichnet,** daß die Tasten des Tastenfeldes (16) wenigstens teilweise an einer Schmalseite (20) des Gehäuses (10) angeordnet sind.

13. Vorrichtung nach Anspruch 1, **dadurch gekennzeichnet,** daß das Gehäuse (38) die Form einer kreisförmigen, etwa handtellergroßen oder handgroßen Schachtel hat, auf deren Kreisumfang Tasten (40-46) zur Bedienung angeordnet sind, auf deren einer Flachseite (48) etwa mittig die Anzeigeeinrichtung (Display) (50) angeordnet ist und in deren Umfangsfläche der Schlitz zum Einführen der Chipkarte (2) ausgebildet ist.

14. Vorrichtung nach Anspruch 13, **dadurch gekennzeichnet,** daß die Tasten (40-46) umfangsmäßig ergonomisch zur Einhandbedienung angeordnet sind, derart, daß beim Halten der Vorrichtung (8) in einer Hand die Finger im wesentlichen auf den Tasten liegen.

15. Vorrichtung nach Anspruch 14, **dadurch gekennzeichnet,** daß die Tasten in ihrer Ausgangslage bündig mit der zylindrischen Umfangsfläche des Gehäuses (38) abschließen und in bogenförmigen randseitigen Ausnehmungen (52-58) des Gehäuses angeordnet sind.

16. Vorrichtung nach einem der vorhergehenden Ansprüche, **dadurch gekennzeichnet,** daß die Vorrichtung (8) eine mit der Lese/Löscheinrichtung verbundene Druckeinrichtung aufweist.

17. Vorrichtung nach einem der vorhergehenden Ansprüche, **dadurch gekennzeichnet,** daß im Inneren des Gehäuses (10, 38) ein durch die Chipkarte (2) betätigbarer Schalter angeordnet ist.

18. Vorrichtung nach Anspruch 17, **dadurch gekennzeichnet,** daß die Stromversorgung wenigstens eines Teiles der Vorrichtung (8) durch den Schalter einschaltbar ist.

19. Vorrichtung nach Anspruch 17 oder 18, **dadurch gekennzeichnet,** daß der Schalter die Lese/Löscheinrichtung und/oder die Anzeigeeinrichtung betätigt.

20. Vorrichtung nach einem der vorhergehenden Ansprüche, **dadurch gekennzeichnet,** daß die Stromversorgungseinrichtung wenigstens eine Batterie aufweist.

21. Vorrichtung nach einem der vorhergehenden Ansprüche, **dadurch gekennzeichnet,** daß die Vorrichtung (8) eine mit der Lese/Löscheinrichtung verbundene Schnittstelle (32) zum Übertragen von Daten von der oder zu der Lese/Löscheinrichtung aufweist.

22. Vorrichtung nach einem der vorhergehenden Ansprüche, **dadurch gekennzeichnet,** daß im Inneren des Gehäuses (10, 38) Mittel vorgesehen sind, die die Chipkarte (2) beim Einführen in das Gehäuse entgegen der Einführrichtung vorspannen.

23. Vorrichtung nach einem der vorhergehenden Ansprüche, **dadurch gekennzeichnet,** daß die Chipkarte (2) nach Einführen in das Gehäuse (10, 38) einrastet und durch eine Auswerfeinrichtung auswerfbar ist.

## Claims

1. A device for reading and erasing data from chip cards (2) associated with the device (8, 16), which comprise at least one memory in which at least one data file associated with at least one emitter is stored, which consists at least of one data set (60) and a head (62), in which all information and keys (64-74) for a secure access mode are stored, data files of different emitters being separated from one another,
having a housing (10, 38) that is constructed essentially flat for manipulation,
having a current supply device that is disposed in the housing (10, 38) of the device (8, 16),
having a read/erase device that is disposed in the housing (10, 38) and is constructed to read and erase data stored in the memory of the chip card (2),
having a slot (24) formed in one of the narrow sides (20) of the housing (10, 38) for the introduction of a chip card (2) into the housing in the region of the read/erase device,
having a control unit for controlling the device (8, 16) and
having a display device (12, 50) that is connected to the read/erase device for the display of at least one data set read from the memory of the chip card (2), the data sets being organised or the device (8, 16) organising the data sets so that one data set can be represented as a page or several data sets can be represented as several pages on the display device (12, 50).

2. A device according to Claim 1,
**characterised in that** provided in the head (62) of the chip card (2) or in the program of the device (8) for reading and/or erasing is at least one data set that can be represented on at least a first overview (76) of the display (12, 50), whose data are organised so that they are associated line by line with the emitters and can be actuated by a control unit.

3. A device according to Claim 1 or 2,
**characterised in that** contained in the head (62) of the chip card (2) is a short description (72) of the data in plain text, which can be represented on at least a second overview (80) of the display device (12, 50).

4. A device according to Claim 1,
**characterised in that** the data sets of various data files are stored as chained lists in a data file and can be actuated by head information,
**and in that** related data sets of the data files can be actuated by the device (8) via associated information stored in the head.

5. A device according to one of the preceding Claims,
**characterised in that** the display device comprises a display field (12, 50).

6. A device according to Claim 5,
**characterised in that** the size of the display field (12, 20) is chosen so that at least one side stored on the chip card (2) can be simultaneously displayed.

7. A device according to Claim 5 or 6,
**characterised in that** the display field (12, 50) is an LCD display field.

8. A device according to one of Claims 1 to 7,
**characterised in that** the display field (12, 50) is disposed on one of the flat sides (11, 48) of the housing (10, 38).

9. A device according to one of Claims 6 to 8,
**characterised in that** the size of the display field (12) corresponds substantially with the size of the flat side (11) of the housing (10).

10. A device according to one of the preceding Claims,
**characterised in that** the chip card (2) can be received substantially completely in the housing (10, 38).

11. A device according to one of the preceding Claims,
**characterised in that** the control unit comprises a key field (16).

12. A device according to Claim 11,
**characterised in that** the keys of the key field (16) are disposed at least partly on one narrow side (20) of the housing (10).

13. A device according to Claim 1,
**characterised in that** the housing (38) has the shape of a box roughly the size of the palm of a hand or the size of a hand, on whose circumference keys (40-46) are disposed for operation, on one flat side (48) of which the display device (50) is disposed roughly centrally and in whose peripheral face the slot for the introduction of the chip card (2) is constructed.

14. A device according to Claim 13,
**characterised in that** the keys (40-46) are ergonomically disposed with respect to the periphery for one-handed use in such a manner that when holding the device (8) in one hand the fingers lie substantially on the keys.

15. A device according to Claim 14,
**characterised in that** in their initial position the keys end flush with the cylindrical peripheral face of the housing (38) and are disposed in curved recesses (52-58) on the edge of the housing.

16. A device according to one of the preceding Claims,
**characterised in that** the device (8) comprises a printing device connected to the read/erase device.

17. A device according to one of the preceding Claims,
**characterised in that** a switch that can be actuated by the chip card is disposed inside the housing (10, 38).

18. A device according to Claim 17,
**characterised in that** the current supply for at least one part of the device (8) can be switched on by the switch.

19. A device according to Claim 17 or 18,
**characterised in that** the switch operates the read/erase device and/or the display device.

20. A device according to one of the preceding Claims,
**characterised in that** the current supply device comprises at least one battery.

21. A device according to one of the preceding Claims,
**characterised in that** the device (8) comprises an interface (32) connected to the read/erase device for the transmission of data from the or to the read/erase device.

22. A device according to one of the preceding Claims,
**characterised in that** means which bias the chip card during introduction into the housing against the direction of insertion are provided in the interior of the housing (10, 38).

23. A device according to one of the preceding Claims,
**characterised in that** after insertion the chip card (2) engages in the housing (10, 38) and can be ejected by an ejection device.

## Revendications

1. Dispositif pour lire et effacer des données de cartes à puces (2) adjointes au dispositif (8, 16), qui présentent au moins une mémoire dans laquelle sont mémorisées au moins des données adjointes à au moins un émetteur et qui sont constituées d'au moins un article (60) et présentent une tête (62) dans laquelle sont mémorisées toutes les informations et clés (64-74) pour un processus d'accès sûr, des données d'émetteurs différents étant séparées les unes des autres,
- avec un boîtier (10, 38) plat dans son ensemble conformé pour être tenu dans la main,
- avec une installation d'alimentation en courant disposée dans le boîtier (10, 38) du dispositif (8, 16),
- avec un dispositif de lecture/effacement, disposé dans le carter (10, 38), conformé pour lire et effacer des données mémorisées dans la mémoire de la carte à puce (2),
- avec une fente (24), formée dans une petite face (20) du boîtier (10, 38) pour l'introduction d'une carte à puce (2) dans le boîtier dans la zone du dispositif de lecture/effacement,
- avec une installation de commande pour commander le dispositif (8, 16) et
- avec une installation d'affichage (12, 50), reliée à l'installation de lecture/effacement, pour afficher au moins un article lu dans la mémoire de la carte à puce (2), les articles étant organisés ou étant organisés par le dispositif (8, 16) de telle manière qu'un article peut être représenté sous forme d'une page, ou plusieurs articles sous forme de plusieurs pages sur l'installation d'affichage (12, 50).

2. Dispositif selon la revendication 1,
caractérisé en ce que, dans la tête (62) de la carte à puce (2) ou dans le programme du dispositif (8) pour lire et/ou effacer, est disponible au moins un article pouvant être représenté par au moins un premier sommaire (76) de l'affichage (12, 50), dont les données sont organisées de telle manière que celles-ci sont adjointes par lignes aux émetteurs et peuvent être sélectionnées par installation de commande.

3. Dispositif selon la revendication 1 ou 2,
caractérisé en ce que, dans la tête (62) de la carte à puce (2), est contenu un résumé (72) des données en clair, qui peuvent être représentées sur au moins un- second sommaire (80) de l'installation d'affichage (12, 50).

4. Dispositif selon la revendication 1,
caractérisé en ce que les articles de diverses données sont mémorisés en des données sous formes de listes enchaînées et peuvent être appelés par des informations de tête et que des articles contigus des données peuvent être appelés par le dispositif (8) par des informations adjointes mémorisées dans la tête (62).

5. Dispositif selon l'une des revendications précédentes,
caractérisé en ce que l'installation d'affichage présente un champ d'affichage (12, 50).

6. Dispositif selon la revendication 5,
caractérisé en ce que la dimension du champ d'affichage (12, 50) est choisie de telle manière qu'au moins une page mémorisée sur la carte à puce (2) peut être affichée simultanément.

7. Dispositif selon la revendication 5 ou 6,
caractérisé en ce que le champ d'affichage (12, 50) est un champ d'affichage à cristaux liquides.

8. Dispositif selon la revendication 1 à 7,
caractérisé en ce que le champ d'affichage (12, 50) est disposé sur l'une des faces planes (11, 48) du boîtier (10, 38).

9. Dispositif selon l'une des revendications 6 à 8,
caractérisé en ce que la dimension du champ d'affichage (12) correspond essentiellement à la dimension de la face plane (11) du boîtier (10).

10. Dispositif selon l'une des revendications précédentes,
caractérisé en ce que la carte à puce (2) peut être reçue essentiellement complètement dans le boîtier (10, 38).

11. Dispositif selon l'une des revendications précédentes,
caractérisé en ce que l'installation de commande présente un clavier (16).

12. Dispositif selon la revendication 11,
caractérisé en ce que les touches du clavier (16) sont disposées au moins partiellement sur une petite face (20) du boîtier (10).

13. Dispositif selon la revendication 1,
caractérisé en ce que le boîtier (38) a la forme d'une boîte circulaire sensiblement de la grandeur d'une soucoupe ou de la grandeur d'une main, sur la périphérie de laquelle sont disposées des touches (40-46) de commande, sur l'une des faces planes (48) de laquelle est disposée, sensiblement centralement, l'installation d'affichage (display) (50) et dans la face périphérique de laquelle est formée la fente pour l'introduction de la carte à puce (2).

14. Dispositif selon la revendication 13,
caractérisé en ce que les touches (40-46) sont réparties à la périphérie, ergonomiquement pour une commande d'une seule main, de telle manière que, lors de la tenue du dispositif (8) dans une main, les doigts reposent essentiellement sur les touches.

15. Dispositif selon la revendication 14,
caractérisé en ce que les touches, dans leur position de départ, se terminent à fleur de la surface périphérique cylindrique du boîtier (38) et sont disposées dans des évidements (52-58) arrondis du côté du bord du boîtier.

16. Dispositif selon l'une des revendications précédentes,
caractérisé en ce que le dispositif (8) présente une imprimante reliée à l'installation de lecture/effacement.

17. Dispositif selon la revendication 17,
caractérisé en ce qu'un interrupteur, actionnable par la carte à puce (2), est disposé dans l'intérieur du boîtier (10, 38).

18. Dispositif selon l'une des revendications précédentes,
caractérisé en ce que l'alimentation en courant d'au moins une partie du dispositif (8) peut être mise en service par l'interrupteur.

19. Dispositif selon la revendication 17 ou 18,
caractérisé en ce que l'interrupteur actionne l'installation de lecture/effacement et/ou l'installation d'affichage.

20. Dispositif selon l'une des revendications précédentes,
caractérisé en ce que l'installation d'alimentation en courant présente au moins une batterie.

21. Dispositif selon l'une des revendications précédentes,
caractérisé en ce que le dispositif (8) présente un interface (32) relié à l'installation d'écriture/effacement pour la transmission de données depuis ou à l'installation de lecture/effacement.

22. Dispositif selon l'une des revendications précédentes,
caractérisé en ce que des moyens, qui précontraignent la carte à puce (2), lors de l'introduction dans le boîtier, en sens contraire de la direction d'introduction sont prévus dans l'intérieur du boîtier (10, 38).

23. Dispositif selon l'une des revendications précédentes,
caractérisé en ce que la carte à puce (2) s'encliquète après introduction dans le boîtier (10, 38) et peut être éjectée par une installation d'éjection.
